(19) Europäisches Patentamt
European Patent Office
Office européen des brevets

(11) Publication number: 0 298 763 A2

# (12) EUROPEAN PATENT APPLICATION

(21) Application number: 88306263.0

(22) Date of filing: 08.07.88

(51) Int. Cl.4: **C 22 B 34/12**
C 01 G 23/00, C 01 G 23/02,
C 01 G 23/04

(30) Priority: 08.07.87 JP 168840/87
15.07.87 JP 174912/87

(43) Date of publication of application:
11.01.89 Bulletin 89/02

(84) Designated Contracting States:
BE DE ES FR GB IT NL

(71) Applicant: Solex Research Corporation of Japan
23-9, Maruyama-cho
Shibuya-ku Tokyo (JP)

(72) Inventor: Watanabe, Morio
1-1-11-1250, Takasu-cho
Nishinomiya-shi Hyogo-ken (JP)

Sei, Renpei
4-10-12, Yuigahama
Kamakura-shi Kanagawa-ken (JP)

(74) Representative: Brewer, Leonard Stuart et al
SANDERSON & CO. European Patent Attorneys 34, East Stockwell Street
Colchester Essex CO1 1ST (GB)

## (54) Method for recovering titanium.

(57) A method for recovering titanium from a sulfuric acid solution containing chiefly titanium and iron, comprises adding NaCl or the like to the sulfuric acid solution and contacting the resultant solution with a specified organic solvent to extract iron from the aqueous solution into the organic solvent as chloride complex, contacting the residual aqueous solution with another specified organic solvent to extract titanium from the aqueous solution into that organic solvent as chloride complex, contacting the resultant organic solution with an aqueous solution containing $NH_4^+$ or $K^+$ together with HF to inversely extract titanium ions therein, and then adding $NH_3$ gas, $NH_4OH$ or KOH to the aqueous solution to form a precipitate such as $(NH_4)_2TiF_6$ or titanium hydroxide. Titanium halides and alkoxides may be produced from the precipitate.

EP 0 298 763 A2

## Description

# METHOD FOR RECOVERING TITANIUM

Background of the Invention:

Field of the Invention:

The present invention relates to a method for recovering titanium from an aqueous solution of acids such as sulfuric acid, hydrochloric acid, hydrofluoric acid and nitric acid, containing titanium ions and iron ions together with one or more kinds of other metal ions dissolved therein.

Description of the Related Art:

It has been a common practice to produce titanium cloride, which is used most widely among titanium halides as an important intermediate substance for the production of metallic titanium and titanium oxide, by adding chlorine to natural rutile under the presence of carbon at an elevated temperature as in the following:

$$TiO_2 + 2C + 2Cl_2 \rightarrow TiCl_4 + 2CO$$

In contrast to this, a method of using ilmenite ($FeTiO_3$), which is abundantly found in the ground and is cheap, as a raw material therefor has recently been developed. However, ilmenite contains only about 50% of $TiO_2$, and yet, a large quantity of iron contained therein consumes chlorine in producing $TiCl_4$ therefrom. so that it is necessary to concentrate $TiO_2$ preliminarily by dissolving iron by using such acids as sulfuric acid and hydrochloric acid.

For dissolving iron from a raw material of titanium such as ilmenite with the use of an acid, it is necessary in the first place to reduce iron to the state of divalent by using such an apparatus as rotary kiln. Moreover, a large quantity of energy is required for the recovery of the waste acid containing iron dissolved therein. Therefore, the use of ilmenite has not yet been practised widely. Under such circumstances, the present inventors developed as disclosed in Japanese Patents No. 1,086,784, No. 1,279,905 and No. 1,278,025, a method for extracting iron economically from ilmenite, and on the other hand, the thus recovered iron has widely been used as pigment, battery material and magnetic material. Accordingly, it is possible to utilize ilmenite as a raw material for the production of titanium halides in a commercial scale at the present time, and the method for producing artificial rutile from ilmenite based on the above mentioned method can sufficiently cope with the method of using natural rutile in the point of cost. However, in treating waste acid solutions containing Ti ions and Fe ions occured in the production of artificial rutile and recovering the acid therefrom, the process is complicated, consuming a large quantity of energy, so that its economy depends on the cost of energy. Moreover, since it is difficult to recover Ti ions dissolved together with Fe ions in the acid, it is necessary to dissolve iron alone selectively from the raw material. In this way, there are many difficulties, and accordingly there is a limitation that such a method cannot be applicable industrially.

For producing $TiCl_4$ from artificial rutile with a purity in the range of about 80-95% obtained in this way, it is reacted with chlorine under the addition of carbon at a temperature of 900-950° C according to the equation as shown previously in the case of natural rutile.

Chlorination is done usually in a fluidized bed furnace, but there are such drawbacks therein that the operation requires a great deal of skill, and since the amount of chlorine gas necessary for fluidization and reaction is enormous, there occurs very serious danger when such a large quantity of chlorine leaks from the furnace due to natural accidents such as earthquake. Therefore, the locality of the factory must be limited.

Moreover, $TiCl_4$ thus produced contains frequently impurities, which are contained in the raw material such as Al and V, in such forms as $AlCl_3$ and $VOCl_3$, so that it is necessary to purify it by distillation, which is a dangerous, long and complicated process requiring highly skilled operators. Therefore, there is also a drawback that anyone cannot easily establish a commercial plant.

For producing halides of titanium other than $TiCl_4$, for instance $TiF_4$ and $TiI_4$, its raw material is metallic titanium and a method for producing $TiF_4$ and $TiI_4$ directly from natural or artificial rutile is not yet proposed.

To add some comments in this place, as a method for dissolving natural resources such as ilmenite and anatase with the use of strong hydrochloric acid and separating Fe ions from the solution obtained, U.S.P. 3,104,950 discloses a method of extracting iron dissolved in an aqueous solution into a neutral phosphoric acid ester such as tributyl phosphate (TBP) as iron chloride complex. Further, U.S.P. 3,795,727 teaches to utilize ketones and ethers as an extractant. These prior art methods are to apply hydrolysis as a method for the recovery of titanium after the separation of iron, but there are such defects therein that the commercial value of titanium oxide obtained is low and that the production cost is high because precious HCl must be used.

Further, U.S.P. 3,067,010 discloses a method for producing purified titanium oxide and/or ammonium hexafluorotitanate ($(NH_4)_2TiF_6$) by dissolving ilmenite in strong sulfuric acid and extracting titanium ions from the solution obtained into alkyl phosphoric acid by removing iron, but this method has a drawback that Ti ions cannot be separated completely from iron ions in the course of extraction. While a method is also disclosed to

bring the concentrated hydrocholoric acid into contact with the organic phase in which Fe ions are extracted together with Ti ions for removing iron ions selectively therefrom, a large quantity of HCl must be used for the complete removal of Fe ions, and accordingly this method has a drawback that the method is economically inferior.

In this way, a method for improving conventional sulfuric acid method, in which the merit of dissolving the raw material in sulfuric acid and hydrolyzing the resultant solution are utilized on one hand, and the drawbacks of the neutralization treatment of waste sulfuric acid after hydrolysis and the recovery of Ti ions contained in the waste acid are economized on the other hand, is not yet proposed.

Summary of the Invention:

The object of the present invention is to offer a method for recovering titanium from mineral resources such as ilmenite, anatase and brookite, concentrated titanium slag artificially produced, and the industrial wastes such as the waste acid in the manufacture of titanium oxide, and thus hydroxide, halides and alkoxides of titanium can be produced economically.

The gist of the invention lies in, in the first place, that ions selected from the group consisting of Na ions, K ions, Mg ions and $NH_4$ ions in the form of a compound containing chlorine are added to a sulfuric acid solution containing Ti ions, Fe ions and at least one of other metal ions in an amount corresponding at least to the chemical equivalent to $SO_4$ ion contained. When Fe in the sulfuric acid solution exist as $Fe^{2+}$ ions, they are preferably previously oxidised to $Fe^{3+}$ ions by addition of an oxidizing agent. The resultant aqueous solution is brought into contact with one or more organic solvents containing oxygen and/or comprising alkylamine and diluted with a petroleum hydrocarbon for extracting Fe ions from said sulfuric acid solution into the organic solvent as chloride complex according to the equation as follows, and thus Ti ions and Fe ions are separated and sulfuric acid is neutralized.

$Fe_2(SO_4)_3 + H_2SO_4 + 8NaCl + Org. \rightarrow 2HFeCl_4 \cdot Org. + 4Na_2SO_4$

$Fe_2(SO_4)_3 + H_2SO_4 + 8KCl + Org. \rightarrow 2HFeCl_4 \cdot Org. + 4K_2SO_4$

In the case where the content of Fe ion is smaller than the amount of $SO_4$ ion in the sulfuric acid solution, it is preferable to add Fe ions thereto for controlling the mol ratio of Fe ion to $SO_4$ ion nearly to 1 : 2. Then, after adding such a compound as comprising Na and Cl, K and Cl or $NH_4$ and Cl to the resultant solution for extracting iron chloride complex therefrom into the above mentioned organic solvent and neutralizing the residual aqueous solution.

As a method for controlling the Fe ion concentration in said sulfuric acid solution, it is desirable to add a substance containing Fe and Ti simultaneously. In treating the waste acid occurring in the production of titanium oxide with the use of sulfuric acid, it is preferable to add its raw material such as ilmenite, anatase or high titanium slag as it stands or preferably after their reduction treatment to facilitate the dissolution of iron. Industrial waste containing iron may also be added. By dissolving iron in the raw material such as ilmenite, anatase and high titanium slag, the titanium content thereof can be elevated, and accordingly their added value as a raw material can be elevated.

On the other hand, the iron chloride complex extracted in the organic solvent can be brought into contact, as well known, with water for inversely extracting Fe ion and Cl ion into the aqueous solution and regenerating the organic solvent according to the equation as follows:

$$HFeCl_4 \cdot Org. + H_2O \longrightarrow \underset{(aq.)}{(FeCl_3 + HCl + H_2O)} + Org.$$

When $HNO_3$ is used as an oxidizing agent of $Fe^{2+}$ ion, $HNO_3$ is also extracted together with iron chloride complex into the organic phase.

$HNO_3 + Org. \rightarrow HNO_3 \cdot Org.$

In this instance, the resultant organic solution can be brought. prior to inverse extraction of Fe ions and Cl ions, into contact with an aqueous solution containing, for instance, NaCl for inversely extracting $HNO_3$ into the aqueous solution by leaving Fe ions and Cl ions in the organic phase.

$HNO_3 \cdot Org. + NaCl \rightarrow (NaNO_3 + HCl) + Org.$

Inversely extracted $HNO_3$ can be used repeatedly for the oxidation of $Fe^{2+}$ ions.

The process for removing iron from the starting sulfuric acid solution is as above described.

The thus treated aqueous solution, which contains titanium ions and from which iron ions are removed, is brought into contact with an organic solvent (A) comprising one or more extractants selected from the group consisting of alkylphosphoric acids and alkylarylphosphoric acids and diluted with a petroleum hydrocarbon for extracting titanium ions from the aqueous solution selectively into the organic solvents and then the organic solvent (A) containing titanium ions is brought into contact with an aqueous solution containing NH or $K^+$ together with HF for inversely extracting titanium ions into the aqueous solution and regenerating the organic solvent (A).

To the aqueous solution into which the titanium ions have been inversely extracted, $HN_3$ gas, $NH_4OH$ or KOH is added to form a precipitate containing titanium ions together with $NH_4^+$ or $K^+$ and $F^-$ and/or a precipitate of titanium hydroxide. Then preferably one or more acids selected from the group consisting of sulfuric acid, hydrochloric acid, hydrofluoric acid, hydriodic acid and hydrobromic acid are further added to the aqueous solution to dissolve the precipitate containing titanium ions thus formed and/or to adjust the concentration of $H^+$ ions in the resultant solution, and then an oxygen-containing organic solvent (B) selected from the group consisting of esters , ethers, ketones, amides and alcohols is added to extract the titanium ions from the aqueous solution into the organic solovent (B) as halide complexes.

The thus obtained oxygen-containing organic solvent (B) containing titanium halide complexes is preferably subjected to evaporation by heating under the ordinary atmospheric or reduced pressure to produce titanium halide and regenerate the oxygen containing organic solvent (B).

The organic solvent (B) containing titanium thus obtained may be used for the production of titanium alkoxide. In this case, the organic phase is evaporated or dried to remove the hydrogen halide and water contained therein, then an alcohol containing alkyl group necessary for the formation of alkoxide is added to the resultant organic phase, and $NH_3$ gas is added thereto to produce titanium alkoxide together with ammonium halide and regenerate the oxygen-containing organic solvent (B).

In the production of the titanium oxide from the raw material containing a large amount of iron for instance ilmenite and anatase by the sulfuric acid method according to the present invention, not only titanium can be recovered economically from the waste sulfuric acid solution containing 350 - 450 g/l $H_2SO_4$ exhausted in a large quantity after the hydrolysis of titanium, but also iron exhausted in the neutralization treatment of the waste acid or contained in the raw material can be utilized for the Fe ion concentration control of the waste acid. Therefore, not only the additional value of the raw material can be elevated, but also the amount of highly concentrated sulfuric acid with a concentration of more than 90% necessary for dissolving the raw material can largely be spared. The effect thereof corresponds, so to speak, the effect of recovering sulfuric acid practically.

Moreover, in the process for producing titanium oxide by the sulfuric acid method, while a more dilute waste acid with a concentration of 10 - 100 g/l $H_2SO_4$ is formed in the washing process of titanium hydroxide obtained besides the above mentioned waste acid with a concentration of 350 - 450 g/l $H_2SO_4$ such a dilute waste acid, too, can be utilized in the present invention, and accordingly the neutralization of waste acid solution can be done by using rock salt, which is distributed widely on earth and cheap, with no need of using expensive sodium hydroxide. Thus oxide, halides and alkoxides of titanium with high quality and containing no iron can advantageously be produced in the present invention.

Detailed Description of Preferred Features of the Invention:

In the present invention, in the first place, to an acid solution containing chiefly titanium ions together with iron ions and one or more kinds of other metal ions, which is obtained by dissolving a natural resource such as rutile, ilmenite and anatase or an artificial resource containing concentrated titanium with the use of an acid selected from the group consisting of sulfuric acid, hydrochloric-acid, nitric acid and hydrofluoric acid, a waste sulfuric acid solution formed in the production of titanium oxide by the sulfuric acid method, or a sulfuric acid solution containing also chiefly titanium ions together with iron ions and one or more kinds of other metal ions such as of Mn, Nb, Sn, Cu, Ni, V, Cr, Al, Zn and Si, which is obtained by evaporating or distilling the mixed acid solution formed by adding sulfuric acid to a mixed solution comprising hydrochloric acid, nitric acid and hydrofluoric acid coming from the surface treatment of a titanium-containing material or a titanium product for separating and recovering HCl, $HNO_3$ and HF therefrom, a solid or liquid material containing iron is added so as to control the ratio of the amount of Fe ion to the amount of $SO_4$, or preferably to the total amount of $SO_4$ combined with Fe and free $SO_4$, as 0.4 - 0.66:1 in mol ratio, and then Na ions, K ions and/or $NH_4$ ions are added in the form of a compound with Cl in an amount of at least chemical equivalent to the amount of $SO_4$ in the solution. In the case when iron exists as $Fe^{2+}$ ions, they have been oxidized to $Fe^{3+}$ ions previously.

The thus obtained aqueous solution is brought into contact with an organic solvent comprising one or more extractants selected from the group consisting of oxygen-containing organic solvents and alkylamines and diluted with a petroleum hydrocarbon for extracting Fe ions in the aqueous solution into the organic solvent as chloride complex selectively so as to separate Fe ions and Ti ions and to neutralize the aqueous solution, for instance, as follows:

$$Fe_2(SO_4)_3 + H_2SO_4 + 4MgCl_2 + Org. \rightarrow 2HFeCl_4 \cdot Org. + 4MgSO_4$$

Fe ions separated from Ti ions and transferred into the organic phase are in the form of chloride complex. These Fe ions are then inversely extracted together with Cl ions by means of a known method into an aqueous solution in contact with water, and the oranic solvent is regenerated.

In the case where $HNO_3$ is used for the oxidation of $Fe^{2+}$ ions prior to the extraction of Fe, $HNO_3$ is extracted together with iron chloride complex into the organic phase, so that it is necessary to remove $HNO_3$ selectively from the organic phase prior to the inverse extraction of Fe ions and Cl ions into the aqueous solution. For removing $HNO_3$ from the organic phase, a solution containing for instance, NaCl $FeCl_3$ and/or HCl may be used as shown in the following equations:

$$\underset{(org.)}{HNO_3\cdot Org.} + \underset{(aq.)}{FeCl_3} + HCl \longrightarrow \underset{(org.)}{HFeCl_4\cdot Org.} + \underset{(aq.)}{HNO_3}$$

$$\underset{(org.)}{HNO_3\cdot Org.} + \underset{(aq.)}{NaCl} \longrightarrow Org. + \underset{(aq.)}{NaNO_3} + HCl$$

$$\underset{(org.)}{HNO_3\cdot Org.} + \underset{(aq.)}{FeCl_3} + NaCl \longrightarrow \underset{(org.)}{HFeCl_4\cdot Org.} + \underset{(aq.)}{NaNo_3}$$

$HNO_3$ transferred to the aqueous solution can be used repeatedly for the oxidation of $Fe^{2+}$ ions.

To the aqueous solution, from which Fe ions have been removed and in which Ti ions are retained together with other metal ions, an organic solvent (A) comprising one or more extractants selected from the group consisting of aklylphosphoric acids and alkylarylphosphoric acids and diluted with a petroleum hydrocarbon is contacted for extracting Ti ions in the aqueous solution preferentially into the organic phase as shown in the following equation:

$$\underset{(aq.)}{Ti^{4+}} + \underset{(org.)}{4RH} \longrightarrow \underset{(org.)}{TiR_4} + \underset{(aq.)}{4H^+}$$

$Ti^{3+}$ ions can similarly be extracted into the organic phase with the use of the organic solvent (A).

While the metal ions which can be extracted from strongly acidic aqueous solution into an organic solvent are only Ti ions and $Fe^{3+}$ ions, $Fe^{3+}$ ions have been extracted previously as halide complex, so that what are extracted in this instance are only Ti ions. However, among the ions such as Na ions, K ions, Mg ions and $NH_4$ ions added together with Cl ions to the acid solution prior to the extraction of Fe ions, there may be some kinds of ions which may be extracted together with Ti ions into the organic solvent. These impurity ions are removed from the organic phase with the use of dilute sulfuric acid, hydrochloric acid, nitric acid or hydrofluoric acid, which are formed as a waste acid in the other processes. In this instance, Ti ions in the organic phase are not removed at all, and thus Ti ions in the organic phase can sufficiently be purified.

The organic solvent (A) containing purified Ti ions is brought into contact with a HF solution containing $NH_4^+$ or $K^+$ for inversely extracting Ti ions into the aqueous solution and regenerating the organic solvent (A). For instance,

$$\underset{(org.)}{Ti\cdot R_4} + \underset{(aq.)}{3NH_4HF_2} \longrightarrow \underset{(org.)}{3R\cdot H} + \underset{(org.)}{R\cdot NH_4} + \underset{(aq.)}{(NH_4)_2TiF_6}$$

where R $NH_4$ is to show an organic solvent having an NH type transformation radical.

Then, $NH_3$ gas, $NH_4OH$ or KOH is added to the aqueous solution containing titanium ions inversely extracted to form the precipitate of the compound containing $NH_4$ and F represented by $(NH_4)_2TiF_6$, the compound containing K and F represented by $K_2TiF_6$ or titanium hydroxide. For instance, by diluting the inverse extraction aqueous solution and adding $NH_4OH$ thereto so as to increase the pH of the solution, titanium hydroxide is precipitated according to the following equation:

$$(NH_4)_2TiF_6 + 4NH_4OH \rightarrow Ti(OH)_4 + 6NH_4F$$

As it is well known, in accordance with the change of the $NH_4$ and HF concentrations, the contents of $NH_4$, O, H and F in the titanium compound formed vary, of course, in different ways.

On the other hand, in increasing the Ti ion concentration in the inverse extraction aqueous solution by continuing the inverse extraction, crystals of $(NH_4)_2TiF_6$ or $K_2TiF_6$ can be obtained.

Then, one or more acids selected from the group consisting of sulfuric acid, hydrochloric acid, hydriodic acid and hydrobromic acid are added to the inverse extraction aqueous solution containing titanium ions and/or the precipitate containing titanium obtained in the preceding process for dissolving the precipitate and/or controlling the pH of the solution, and an oxygen-containing organic solvent (B) selected from the group consisting of esters, ethers, ketones and alcohols is added thereto to extract titanium ions in the

aqueous solution into the organic solvent (B) as halide complex. The reaction is as follows:

$$\underset{(aq.)}{(NH_4)_2TiF_6} + \underset{(aq.)}{HF} + \underset{(aq.)}{H_2SO_4} + \underset{(org.)}{nOrg.} \longrightarrow$$

$$\underset{(org.)}{H_2TiF_6 \cdot nOrg.} + \underset{(aq.)}{(NH_4)_2SO_4} + \underset{(aq.)}{HF}$$

The organic solvent (B) containing titanium halide complex thus extracted is either brought into contact with a drying agent in the subsequent drying process for removing water physically contained and extracted therein, or evaporated or distilled under reduced pressure for removing water and hydrogen halide as follows:

$$H_2TiF_6 \cdot nOrg. + H_2O \cdot Org. \xrightarrow[\text{heating}]{} TiF_4 \cdot Org. + 2HF\uparrow + H_2O\uparrow$$

$H_2O$ and HF thus separated are used repeatedly for the inverse extraction process of Ti ions.

When the organic solvent (B) from which a part of water and HF are removed and still containing titanium and halogen is heated under reduced pressure, the oxygen-containing organic solvent (B) can be recovered by leaving $TiF_4$ as follows:

$TiF_4 \cdot Org. \rightarrow Org.\uparrow + TiF_4$

The oxygen-containing organic solvent (B) recovered can be used repeatedly for the extraction process.

For the production of titanium alkoxide from the organic phase, after removing water and hydrogen halide by evaporation or distillation under reduced pressure, an alcohol containing an alkyl group necessary for the formation of an alkoxide is added together with $NH_3$ gas, and thus titanium alkoxide and ammonium halide are obtained according to the equation as follows:

$TiF_4 \cdot Org. + 4ROH + 4NH_3 \rightarrow Org. + Ti(OR)_4 + 4NH_4F$

Ammonium halide formed is removed by filtration and washing, and the organic solvent (B) is separated from the alkoxide for reuse by distillation under reduced pressure as follows:

$$Ti(OR)_4 + Org. \xrightarrow[\text{distillation}]{} Ti(OR)_4 + Org.\uparrow$$

Now, the kinds of organic solvents and the diluent to be used in the present invention will be described in the following.

The organic solvent (A) is selected from the following groups:

(1) The group of alkylphosphoric acids:

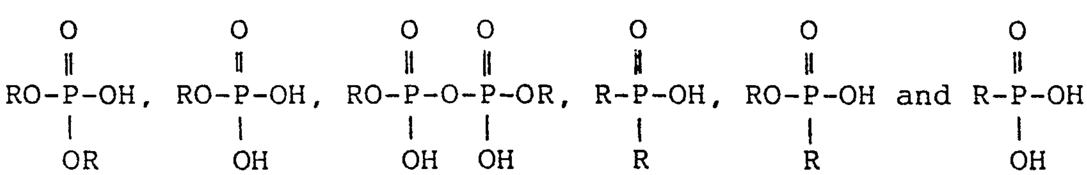

where R represents an alkyl group, and the ones with a carbon number of 4-18 are used in general.

(2) The group of alkylarylphosphoric acid:

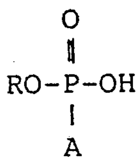

where R represents an alkyl group, and the ones with a carbon number of 4-18 are used in general. A represents an aryl group (such as of phenyl, tolyl and xylyl).

The oxygen containing organic solvent (B) is selected from the following groups:

(1) The group of ketones:

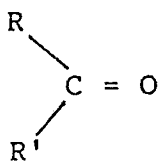

where R and R′ show an alkyl group or an aryl group. Examples are methyl isobutyl ketone, cyclohexanone and methyl propyl ketone.

(2) The group of esters:

The ester can be selected from the group consisting of phosphoric acid esters and acetic acid esters.

(3) The group of ethers:

The ether can be selected from the group consisting of simple and mixed saturated aliphatic ethers, unsaturated aliphatic ethers and aromatic ethers.

(4) The group of alcohols:

Various (normal, secondary and tertiary) alcohols with a carbon number of 4-22.

(5) The group of amides:

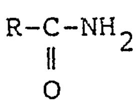, 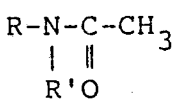 and 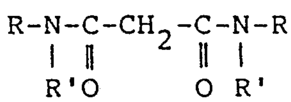

Where R and R′ are an alkyl group or an aryl group with a carbon number of 4-25.

The organic solvent used for the extraction of iron as chloride complex is selected from the following groups:

(1) The group of neutral phosphoric acid esters:

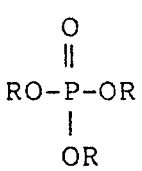, 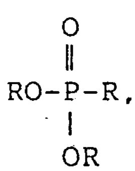, 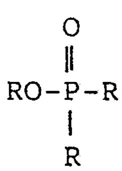 and 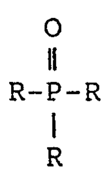

where R shows an alkyl group, and the ones with a carbon number of 4-18 are used.

(2) The group of alkyl amines:

$R-NH_2$, 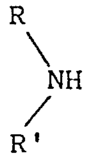 and 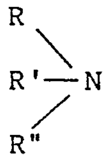

where R, R′ and R″ are alkyl group with a carbon number of 4-24 (primary, secondary and tertiary amines).

(3) The group of alkyl amides:

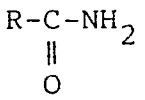 , 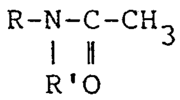 and 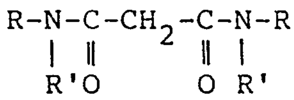

where R and R′ show an alkyl group, and the ones with a carbon number of 4-25 are used.

(4) The group of alcohols:

Various alcohols (primary, secondary and tertiary) with a carbon number of 4 - 22.

When an organic solvent having a high degree of basicity, such as alkylphosphineoxide is used, the amount of Cl ions extracted together with Fe ions is very often three times Fe ions in the molar ratio according to the following reaction:

$Fe_2(SO_4)_3 + 6NaCl + n \cdot Org. \rightarrow 2FeCl_3 \cdot n \cdot Org. + 3Na_2SO_4$

Therefore, when such high basic extractants are used, it is necessary to add Fe-containing solid or liquid so as to assure that the molar ratio of Fe ions to the sum of $SO_4$ combined with Fe and free $SO_4$ approaches the maximum value of 0.66:1. Needless to say, at plants where titanium oxides are produced it is possible to adjust the molar ratio of Fe ions by adding titanium materials, such as anatase and ilmenite, iron sulfate or wastes containing Fe and Ti.

Petroleum hydrocarbon used as a diluent of the extractants may be of aliphatic and aromatic and their mixtures. Such hydrocarbons as benzene can also be used.

Hydrocarbons used as a diluent for titanium alkoxide and for the filtration and washing of titanium halide may be petroleum ether, benzene and hexane, and it is preferable that their boiling point is not higher than 100° C, and the surface tension is not more than 30 dyne/cm at 20° C.

Further, as a drier for removing water coextracted together with titanium halide complex in the organic solvent (B) may be anhydrous sodium sulfate, anhydrous calcium chloride, anhydrous magnesium sulfate, anhydrous magnesium chloride, anhydrous potassium chloride, activated alumina, magnesium perchlorate and phosphorous pentoxide. Molecular sieve such as synthetic zeolite may also be used.

The oxidizing agents to be used in the oxidation process of Fe ion in the present invention are $HNO_3$, $NaNO_3$, $NH_4NO_3$, $KNO_3$, $Mg(NO_3)_2$, $NO_x$ compounds containing $NO_x$ gas, and the oxidizing agent containing Na and Cl simultaneously such as NaClO and $NaClO_2$.

The chloridizing agent to be used in the chloridizing process are the compounds containing Na and Cl in combination such as NaCl represented by rock salt, NaClO and $NaClO_2$, and the compounds containing such constituents as Mg, K and $NH_4$ together with Cl.

Iron containing material to be used for controlling the amount of Fe ion in the waste acid are natural ressources such as anatase ilmenite and brookite, artificial resources such as high titanium slag, industrial wastes containing iron, and waste acids such as waste sulfuric acid and waste nitric acid containing a large amount of iron, and salts such as $Fe(NO_3)_2$ and $FeSO_4 \cdot 7H_2O$. A suitable ratio of the addition amount of Fe to the free and combined sulfuric acid in total in the waste acid is 1 to 0.4 - 0.66 in mol ratio.

Brief Explanation of the Drawings:

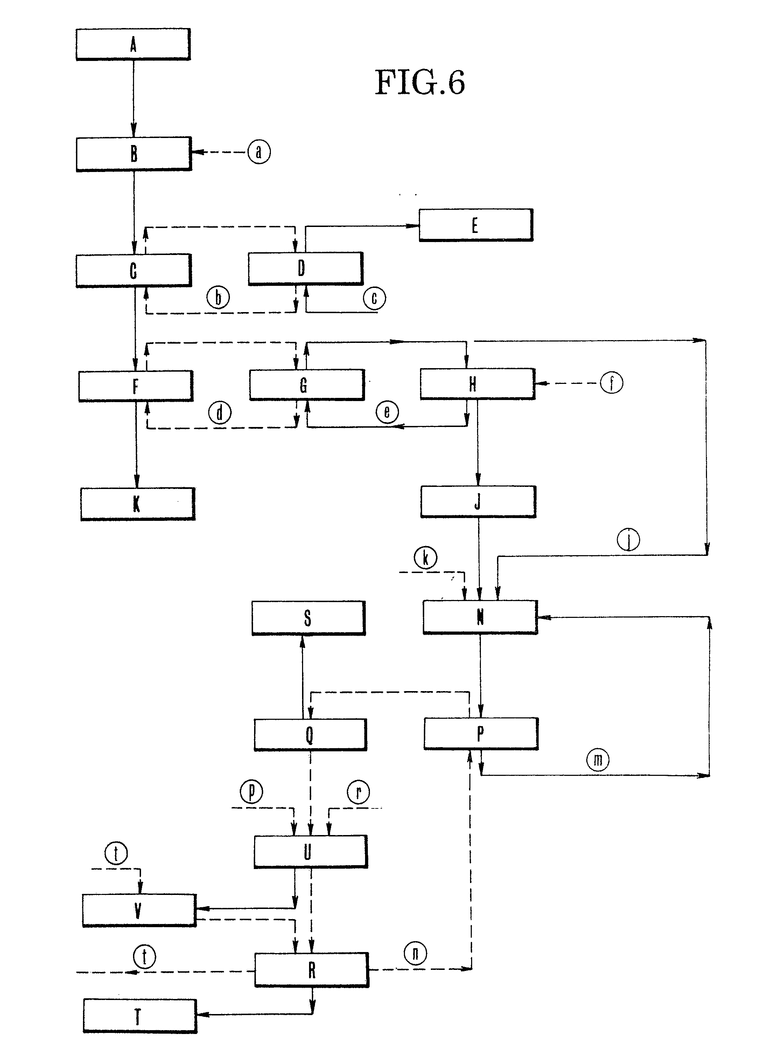

Fig. 1 is a flow sheet showing the basic process of the present invention. Fig. 2 is a flow sheet in which an oxidation step (L) is added for oxidizing Fe ions when Fe ions existing together with Ti ions in an aqueous sulfuric acid solution (A) as a raw material of the invention is in the state of $Fe^2$ ions. Fig. 3 is a flow sheet similarly as in Figs. 1 and 2, but the step of controlling the mol ratio of $SO_4$ ions and Fe ions (M) in the sulfuric acid solution (A) is added. Fig. 4 is a flow sheet similarly as in Figs. 1 to 3, however, relates to a case when a

substance containing $NO_3$ ion such as $HNO_3$, $NaNO_3$, $NH_4NO_3$ and $Fe(NO_3)_3$ is used for the oxidation of $Fe^{2+}$ ions and $HNO_3$ is extracted together with iron chloride complex ions into the organic solvent, and in which a step of inversely extracting $HNO_3$ (W) with the use of an aqueous solution containing such a substance as NaCl, $NH_4Cl$ or $MgCl_2$ is added prior to the inverse extraction of Fe ions and Cl ions. Fig. 5 is a flow sheet in which the step of producing titanium halide is added. Fig. 6 is a flow sheet similarly as in Fig. 5 in which, however, titanium halide complex is extracted into an organic solvent, the resultant organic solution is dried, and an alcohol is added together with $NH_3$ thereto for producing titanium alkoxide.

Preferred Embodiments of the Invention:

The embodiments of the present invention will be illustrated in the following with reference to the drawings showing the flow sheets thereof, but the scope of the invention is not limited merely thereto.

Fig. 1 is to show the basic type of the present inventive method for forming titanium halides and hydroxide. The raw material (A) of the invention comprises an aqueous solution containing chiefly titanium and iron together with one or more other metals dissolved in sulfuric acid.

The raw material (A) is introduced into the chloridizing step (B), and a compound containing Na, K, Mg or $NH_4$ together with Cl (a) is added thereto for providing Cl ions in the sulfuric acid solution. The resultant solution is transferred into the extraction step (C) and brought into contact with an organic solvent (b) comprising an extractant selected from the group consisting of oxygen-containing organic solovents and alkylamines and diluted with a petroleum hydrocarbon to extract Fe ions in the sulfuric acid solution into an organic solvent as iron chloride complex ions and separate Ti ions completely from Fe ions. The organic solvent (b) containing Fe ions together with Cl ions is introduced into the inverse extraction step (D) and brought into contact with water (c) for transferring Fe ions and Cl ions into the aqueous solution (F) and regenerating the organic solvent (b).

The aqueous solution containing the inversely extracted Fe ions and Cl ions (E) comprises purified iron chloride containing no impurities such as sulfates, so that due to the double decomposition with, for instance, cheap $Ca(OH)_2$, iron hydroxide can readily be produced, and the residual solution comprises $CaCl_2$ containing no precipitate such as gypsum. Iron oxide and metallic iron with high purity can easily be produced from the thus obtained iron hydroxide, and they can be utilized as electronic material and pigment.

The aqueous solution containing Ti ions together with other metal ions is introduced into the titanium extraction step (F) and brought into contact with an organic solvent (d) comprising one or more extractants selected from the group consisting of alkylphosphoric acids and alkylarylphosphoric acids and diluted with a petroleum hydrocarbon to transfer Ti ions in the aqueous solution into the organic solvent (d), and thus nearly completely neutralized solution (K) containing no expensive metals such as titanium is formed, and thus solution is cooled for producing $Na_2SO_4 \cdot 7SH_2O$ or discharged into river after dilution.

On the other hand, Ti ions transferred into the organic phase is introduced into the inverse extraction step (G) and brought into contact with an aqueous solution (e) containing $NH_4$ or K together with HF to transfer Ti ions into the aqueous solution and regenerate the organic solvent (d). To Ti ions transferred into the aqueous solution, $NH_4$ or K (f) is added together with HF in a subsequent filtration the neutralization step (H) for producing a precipitate (J) containing Ti together with $NH_4$ or K and F, or according to the condition of the aqueous solution, titanium hydroxide (J) can be obtained therefrom.

The flow sheet in Fig. 2 is the same as in Fig. 1 except that the oxidation step (L) is added for the sake when Fe ions in the raw material (A) are in the state of $Fe^{2+}$. This step can be done by adding an oxidant (g) or by an electrochemical oxidation method. The treatments after Fe ions are oxidized is the same as in Fig. 1.

The flow sheet in Fig. 3 is also basically the same as in Figs. 1 and 2. When the amount of Fe ions in the sulfuric acid solution (A) containing Ti ions and Fe ions as the raw material of the invention is less than 0.66 in mol as compared with the amount of sulfuric acid, free and combined with iron in total in the solution, the neutralization of the solution after the removal of Fe ions cannot be done satisfactorily. Therefore, for the purpose to make the mol ratio of $SO_4$ to Fe as 1 : 0.66 - 0.4, the step (M) for adding ilmenite, anatase, high titanium slag, iron sulfate or industrial waste containing Fe (h) is inserted prior to the chloridizing step (B). The treatments thereafter are the same as in Fig. 2.

The flow sheet in Fig. 4 is similar to the case of Fig. 3. However, when the oxidant used for the oxidation of $Fe^{2+}$ ions is nitric acid or nitrate, $HNO_3$ is extracted together with Fe ions and Cl ions into the organic solvent (b) in the extraction step (C) for extracting Fe ions as chloride complex. Therefore, in the case of this figure, the organic solvent (b) containing Fe ions together with Cl ions and $HNO_3$ is introduced in the washing step (W) and brought into contact with an aqueous solution (a) containing Fe ions and Cl ions together with such a constituent as NaCl, $MgCl_2$ or $NH_4Cl$ to transfer $HNO_3$ in the organic solvent (b) into the aqueous solution. $HNO_3$ recovered is transferred to the step (B & L) for oxidizing and chloridizing the sulfuric acid solution as a raw material (A). The treatments thereafter are the same as in Fig. 3.

The method for the treatment as shown in Fig. 5 is basically the same with the case of Fig. 2. The steps until the inverse extraction step (G), where the organic solvent (d) selected from the group consisting of alkylphosphoric acid and alkylarylphosphoric acids containing titanium halide complex is brought into contact with an aqueous solution (e) containing $NH_4$ or K together with HF for inversely extracting Ti ions in the organic phase into the aqueous solution, are the same as in Figs. 1 - 4. However, in Fig. 5, to the inverse extraction aqueous solution or the precipitate obtained thereby, an acid (k) selected from the group consisting of $H_2SO_4$,

HCl, HF, HI and HBr is added in the dissolution and concentration control step (N) for dissolving and/or controlling the pH of the solution, and then the resultant solution is brought into contact with an oxygen-containing organic solvent (n) selected from the group consisting of ketones, ethers, esters and amides in the titanium halide complex ion extraction step (P) for extracting titanium halide complex ions therein. Then, the resultant organic solution is introduced to the drying step (Q), where a dryer (q) is added thereto or the organic solution is evaporated or distilled under reduced pressure to remove water and a part of hydrogen halide therefrom. The organic solution is further evaporated under reduced pressure in a subsequent separation step (R) for separating titanium halide (T) and the organic solvent (n).

The organic solvent (n) is repeatedly used in the titanium halide complex extraction step (P). On the other hand, the residual solution (m) in the extraction of titanium halide complex ion is repeatedly used in the dissolution step (N), and, after the addition of the precipitate (j) and acid (k), recycled further to the titanium halide complex ion extraction step (P).

The flow sheet in Fig. 6 is the same as in Fig. 5 until $H_2O$ and hydrogen halide (S) are separated from the organic solvent (n) containing titanium halide complex ions extracted in the drying step (Q). The dried organic solvent (n) containing titanium halide complex is introduced into an alkoxide reaction step (U), an alcohol (p) having an alkyl group necessary for the formation of the alkoxide is added thereto, and then $NH_3$ gas is added to produce titanium alkoxide (T) together with ammonium halide (V). Ammonium halide (V) is filtered off, and the remaining organic solution is washed with a hydrocarbon-type washing agent (t) such as benzene and petroleum ether for separating the alcohol dissolved, and the resultant organic solution is transferred to the separation step (R) and separated into the oxygen-containing organic solvent (n), the hydrocarbon-type washing agent (t) and the titanium alkoxide (T).

Hydrogen halide and water (S) separated in the drying step (Q) are recovered and mixed with the inversely extracted solution containing titanium ions (e) or recycled to the dissolution step (N) for the mixing with the residual solution (m) in the extraction of titanium halide complex ions. Ammonium halide (V) obtained in the alkoxide reaction step (U) is recycled to the step of forming the precicpitate of titanium (H) or to the step for producing titanium halide complex ions (N).

Examples:

The present invention will be better understood from the following embodiments.

(1) Removing test of iron ions (step C):

The original solution used for the test was as shown in Table 1:

Table 1 (g/l)

| | |
|---|---|
| Ti | 8.6 |
| $Fe^{3+}$ | 36.7 |
| Mn | 1.1 |
| Cr | 0.06 |
| Al | 3.1 |
| V | 0.04 |
| Total $H_2SO_4$ | 380.5 |
| Total HCl | 253.6 |
| Na | 178.6 |
| Total $HNO_3$ | 31.1 |

The extractant was 30% TBP (tributyl phosphate) + 70% kerosine, and the extracting condition was O/A (organic/aqueous by volume) = 3/1 with a stirring time of 5 min. and a treating temperature of 20-25°C. The aqueous phase after extraction was re-extracted. The analysis of the aqueous phase after extraction is as shown in Table 2.

Table 2 (g/l)

| | (1) | (2) |
|---|---|---|
| Ti | 8.6 | 8.6 |
| $Fe^{3+}$ | 0.3 | < 0.001 |
| Mn | 1.1 | 1.1 |
| Cr | 0.06 | 0.06 |

| | | |
|---|---|---|
| Al | 3.1 | 3.1 |
| V | 0.04 | 0.04 |
| Na | 178.6 | 178.6 |
| Total HCl | 164.1 | 160.0 |
| Total $HNO_3$ | 20.7 | 0.2 |
| Total $H_2SO_4$ | 380.5 | 380.5 |

It is obvious from Table 2 that only Fe ions in the original aqueous solution are extracted into the organic phase sufficiently, and thus Fe ions in the aqueous solution are selectively extracted and separated from titanium ions and other metal ions. Accordingly, pure iron can be obtained. It is known that $HNO_3$ is extracted gradually together with Fe ions and Cl ions into the organic phase.

To the residual aqueous solution in the second time extraction in Table 2, a solution containing Fe ions with a concentration of 36.7 g/l was added until the ratio of Fe to $H_2SO_4$ became 0.5 : 1 in mol, and the extraction was continued further. The extraction condition was O/A = 3/1 and two times with a stirring time of 5 minutes at 40°C. The extractant was 30% TOPO (trioctylphosphine oxide) + 70 % kerosine. The result analysis of the aqueous solution is as shown in Table 3.

Table 3 (g/l)

| | Before Extraction | After Extraction |
|---|---|---|
| Ti | 8.6 | 8.6 |
| $Fe^3$ | 54.6 | 0.12 |
| Mn | 1.1 | 1.1 |
| Cr | 0.06 | 0.06 |
| Al | 3.1 | 3.1 |
| V | 0.04 | 0.04 |
| Na | 178.6 | 178.6 |
| Total HCl | 160.0 | 19.4 |
| Total $HNO_3$ | 0.2 | 0.2 |
| Total $H_2SO_4$ | 380.5 | 380.5 |

From Table 3, it is obvious that, in continuing the extraction, the concentration of the metals other than iron in the residual solution is not changed and only Fe and HCl are extracted. Further, it is obvious that sulfuric acid in the original solution is almost neutralized by means of Na. In cooling the residual solution of extraction, $Na_2SO_4 \cdot 10H_2O$ was precipitated with a high purity.

(2) Extraction test of titanium ions (step F):

The solutions for the test were prepared as shown in Table 4.

Table 4 (g/l)

| Solution | Ti | Mn | Al | Cr | Cu | Zn |
|---|---|---|---|---|---|---|
| (1) HCl 240g/l | 12.8 | 2.1 | 6.4 | 0.8 | 0.1 | 0.5 |
| (2) $H_2SO_4$ 400g/l | 12.6 | 2.1 | 6.1 | 1.1 | 0.1 | 0.5 |
| (3) $HNO_3$ 150g/l | 12.6 | 2.0 | 6.4 | 0.8 | 0.1 | 0.3 |

Extraction condition was O/A = 1/1 with the stirring of 30 minutes at 20-25°C.

Extractants:

(a) 30% $D_2EHPA$ + 70% n-paraffin and

(b) 20% DDPA + 10% $D_2EHPA$ + 70% kerosine. The analysis of the aqueous phase after extracting titanium ions into the organic phase was as in Table 5.

Table 5 (g/l)

| Solution | Ti | | Mn | | Al | | Cr | | Cu | | Zn | |
|---|---|---|---|---|---|---|---|---|---|---|---|---|
| | (a) | (b) | (a) | (b) | (a) | (b) | (a) | (b) | (a) | (b) | (a) | (b) |
| (1) | 0.18 | 0.34 | 2.1 | 2.1 | 6.4 | 6.4 | 0.8 | 0.8 | 0.1 | 0.1 | 0.3 | 0.3 |
| (2) | 0.14 | 0.11 | 2.1 | 2.1 | 6.1 | 6.1 | 1.1 | 1.1 | 0.1 | 0.1 | 0.3 | 0.3 |
| (3) | 0.05 | 0.11 | 2.0 | 2.0 | 6.4 | 6.4 | 0.8 | 0.8 | 0.1 | 0.1 | 0.3 | 0.3 |

(3) Washing test of the extract:

The test was done with the sample as shown in Table 6, which was the mixture of the organic phases containing titanium and other metal ions obtained in the extraction tests with the use of an organic solvent comprising 30% $D_2EHPA$ + 70% n-parafin.

Table 6 (g/l)

| | Ti | $Fe^{3+}$ | Mn | Ni | Zn | Al |
|---|---|---|---|---|---|---|
| Initial concentration | 11.7 | 6.9 | 1.4 | 0.6 | 0.5 | 0.1 |

The washing solutions were four kinds as shown in Table 7. Washing condition was O/A = 10/1 with the stirring of 5 minutes at 20-25°C. The washing rate (in %) was calculated by determining the concentration of each of the constituents in the aqueous phase after washing and subtracting the value from the initial concentration thereof in the organic phase. The result is as shown also in Table 7.

As obvious from Table 7, all the impurity metal ions extracted together with titanium ions in the organic phase can sufficiently be removed in the case of using HCl, and metal ions other than Fe ions can also be almost completely removed by using any of the washing solutions. It can be known accordingly that Fe ions must be removed prior to the extraction of Ti ions as disclosed in the present invention.

Table 7

| | HCl 150g/l | HCl 300g/l | $H_2SO_4$ 400g/l | $HNO_3$ 150g/l |
|---|---|---|---|---|
| Ti ion | 0% | 0% | 0% | 0% |
| $Fe^{3+}$ ion | 68.8% | 90.4% | 6.1% | 1.9% |
| Mn ion | > 99.9% | > 99.9% | > 99.9% | > 99.9% |
| Ni ion | > 99.9% | > 99.9% | > 99.9% | > 99.9% |
| Zn ion | > 99.9% | > 99.9% | > 99.9% | > 99.9% |
| Al ion | > 99.9% | > 99.9% | > 99.9% | > 99.9% |

(4) Inverse extraction test of Ti ions (Step G):

An organic solvent comprising 30% D2EHPA + 70% n-paraffin in which 18.6 g/l of titanium ion was extracted previously was contacted with various inversely extracted aqueous solution. The inverse extraction condition was O/A = 1/1 with the stirring of 10 minutes at 20-25°C.

The inverse extraction rate was calculated by determining the concentration of titanium ion in the aqueous phase after treatment and subtracting the value from the initial concentration thereof in the organic phase. In the case when the aqueous phase after the inverse extraction contains crystals, an acid is added thereto after separating the aqueous phase from the organic phase to dissolve the crystals,and the determination of the aqueous solution is done thereafter. The result is as shown in Table 8.

Table 8

| Number of Contact Time | $NH_4F$ 50g/l | $NH_4HF_2$ 100g/l | $NH_4HF_2$ 150g/l |
|---|---|---|---|
| 1 | 78.2% | 90.1% | > 99.9% |
| 2 | > 99.9% | > 99.9% | —— |

(5) Titanium halide complex ion extraction test (step P):

The concentration of the testing solution was controlled as shown in Table 9.

Table 9 (g/l)

| Ti | Total HF | Total $H_2SO_4$ |
|---|---|---|
| 45.1 | 140.7 | 496.4 |

The extractants used were 100% TBP and 100% MIBK, (methyl isobutyl ketone), and the extraction condition was O/A = 1/5 with the stirring of 5 minutes at 20-25°C. The analysis of the organic phase after extraction is as shown in Table 10.

Table 10 (g/l)

| Solvent | Ti | HF | $H_2SO_4$ | $H_2O$ |
|---|---|---|---|---|
| TBP | 21.6 | 63.0 | < 0.1 | 55.6 |
| MIBK | 20.1 | 54.4 | < 0.1 | 57.8 |

To each of the organic phases in Table 10, anhydrous sodium sulfate was added as a drier and then the water contents in the organic phases were determined by using the Karl Fischer's analyzer. The water content was less than 0.001 g/l in both instances, and thus it could be ascertained that dehydration was almost complete.

(6) The test for the formation of titanium halide:

The organic phases as shown in Table 10 were evaporated by heating under reduced pressure with the addition of $N_2$ gas to complete dryness. The result is as shown in Table 11, and it was ascertained that the residue was essentially $TiF_4$ in the two instances.

Table 11

| Sample (ml) | Residue (g) |
|---|---|
| TBP 150 | 8.4 |
| MIBK 200 | 9.4 |

(7) The test for the formation of titanium alkoxide (steps Q, U, R):

The solution extracted into MIBK as shown in Table 10 was subjected to drying by distillation under reduced pressure. The condition was 40-80°C under the reduced pressure of -750 mmHg. The result is as shown in Table 12.

Table 12

| Sample | Bottom Condensate | Recovered in Condenser |
|---|---|---|
| MIBK 200 ml | 50 ml | MIBK 185 ml, HF + $H_2O$ 18 ml |

The water content of the bottom condensate was not more than 0.001 g/l. Further, it was ascertained from the amounts of HF recovered in the condenser and remaining in the condensate that 2 moles of HF were separated together with 1 mol of water from the organic phase in the course of distillation under reduced pressure as shown in the equation as follows:

$H_2TiF_6 \cdot nOrg. \rightarrow TiF_4 \cdot Org, + Org.\uparrow + 2HF\uparrow + H_2O\uparrow$

To the bottom condensate shown in Table 12, 400 ml of ethanol was added, and then $NH_3$ gas was introduced therethrough. After the formation of $NH_4F$ precipitate and the exhaust of excess $NH_3$ gas were ascertained, the excess of ethanol was removed by distillation. Then, to the precipitate thus obtained, a hydrocarbon solvent (benzene) was added for dissolving titanium alkoxide, and then $NH_4F$ formed as a byproduct was filtered, washed and weighed. The weight was 13.4 g. The hydrocarbon solvent used for the dissolution of the precipitate and for the washing of $NH_4F$ were removed completely, and 19.1 g of $Ti(OEt)_4$

was obtained, corresponding practically to the total amount of Ti extracted.

## Claims

1. A method for recovering titanium from a sulfuric acid solution containing titanium ions and iron ions together with one or more other metal ions, comprising:

adding Na ions, K ions, Mg ions or $NH_4$ ions as a compound containing chlorine to said sulfuric acid solution in an amount at least chemically equivalent to the $SO_4$ ions contained, and bringing the resultant sulfuric acid solution into contact with an organic solvent comprising one or more organic extractants selected from the group consisting of oxygen-containing organic solvents and alkylamines and diluted with a petroleum hydrocarbon to extract the iron ions from said resultant sulfuric acid solution selectively into said organic solvent as chloride complex;

bringing the residual aqueous solution from this treatment into contact with an organic solvent (A) comprising one or more extractants selected from the group consisting of alkylphosphoric acids and alkylarylphosphoric acids and diluted with a petroleum hydrocarbon, to extract the titanium ions from said aqueous solution selectively into said organic solvent (A) as chloride complex;

and bringing said organic solvent (A) containing titanium ions into contact with an aqueous solution containing (1) $NH_4^+$ or $K^+$ together with (2) HF to inversely extract titanium ions into said aqueous solution and to regenerate said organic solvent (A), and then adding $NH_3$ gas, $NH_4OH$ or KOH to the aqueous solution into which titanium ions have been inversely extracted to form a precipitate containing titanium together with (1) $NH_4$ or K and (2) F or a precipitate of titanium hydroxide.

2. A method according to claim 1, in which the compound containing chlorine to be added to the sulfuric acid solution to be treated is rock salt.

3. A method according to claim 1 or 2, in which, in the case when iron contained in the sulfuric acid solution to be treated is in the state of $Fe^{2+}$ ions, an oxidant is added to said sulfuric acid solution for oxidizing $Fe^{2+}$ ions to $Fe^{3+}$ ions prior to the extraction of Fe ions therefrom into the organic solvent.

4. A method according to any one of the preceding claims, in which, in the case when in the sulfuric acid solution to be treated the mol ratio of Fe ion: the total amount of $SO_4$ ion comprising $SO_4$ combined with Fe and free $SO_4^{2-}$ is less than 0.5, a material containing iron in liquid or solid form is added to said sulfuric acid solution for extracting iron ions therefrom in the form of chloride complex into the organic solvent and neutralizing said sulfuric acid solution.

5. A method according to any one of the preceding claims, in which an aqueous solution containing one or more compounds selected from the group consisting of the compounds containing (1) Na, Mg, K, $NH_4$ or Fe together with (2) Cl is brought into contact with the organic solvent containing iron chloride complex when said organic solvent contains simultaneously $HNO_3$ to transfer $HNO_3$ in said organic solvent selectively into the aqueous solution.

6. A method for recovering titanium according to any one of the preceding claims, in which one or more acids selected from the group consisting of sulfuric acid, hydrochloric acid, hydrofluoric acid, hydriodic acid and hydrobromic acid is added to the aqueous solution containing titanium and/or the precipitate containing titanium together with (1) $NH_4$ or K and (2) HF obtained therefrom to dissolve the precipitate and/or adjust the pH of the solution, and an oxygen-containing organic solvent (B) selected from the group consisting of esters, ethers, ketones, amides and alcohols is added to the resulting aqueous solution to extract titanium therefrom into said organic solvent as halide complex;

the oxygen-containing organic solvent (B) containing titanium halide complex is evaporated or distilled by heating under reduced or ordinary atmospheric pressure for removing water and a part of hydrogen halide contained therein; and

an alcohol having an alkyl group necessary for the formation of titanium alkoxide is added together with $NH_3$ gas to the resultant organic phase to produce titanium alkoxide together with ammonium halide, and then after the removal of ammonium halide, the thus treated organic phase is distilled further for obtaining titanium alkoxide and regenerating oxygen-containing organic solvent (B).

7. A method according to any one of the preceding claims, in which the sulfuric acid solution to be treated is one obtained from one or more acid solutions selected from the group consisting of hydrochloric acid solution, nitric acid solution and hydrofluoric acid solution respectively containing chiefly titanium by adding sulfuric acid thereto and evaporating or distilling the resultant solution under reduced or ordinary atmospheric pressure for removing HCl, $HNO_3$ or HF.

8. A method according to claim 6, in which the oxygen-containing organic solvent (B) containing titanium halide complex is evaporated by heating under reduced pressure for producing titanium halide and regenerating the oxygen-containing organic solvent (B).

FIG.1

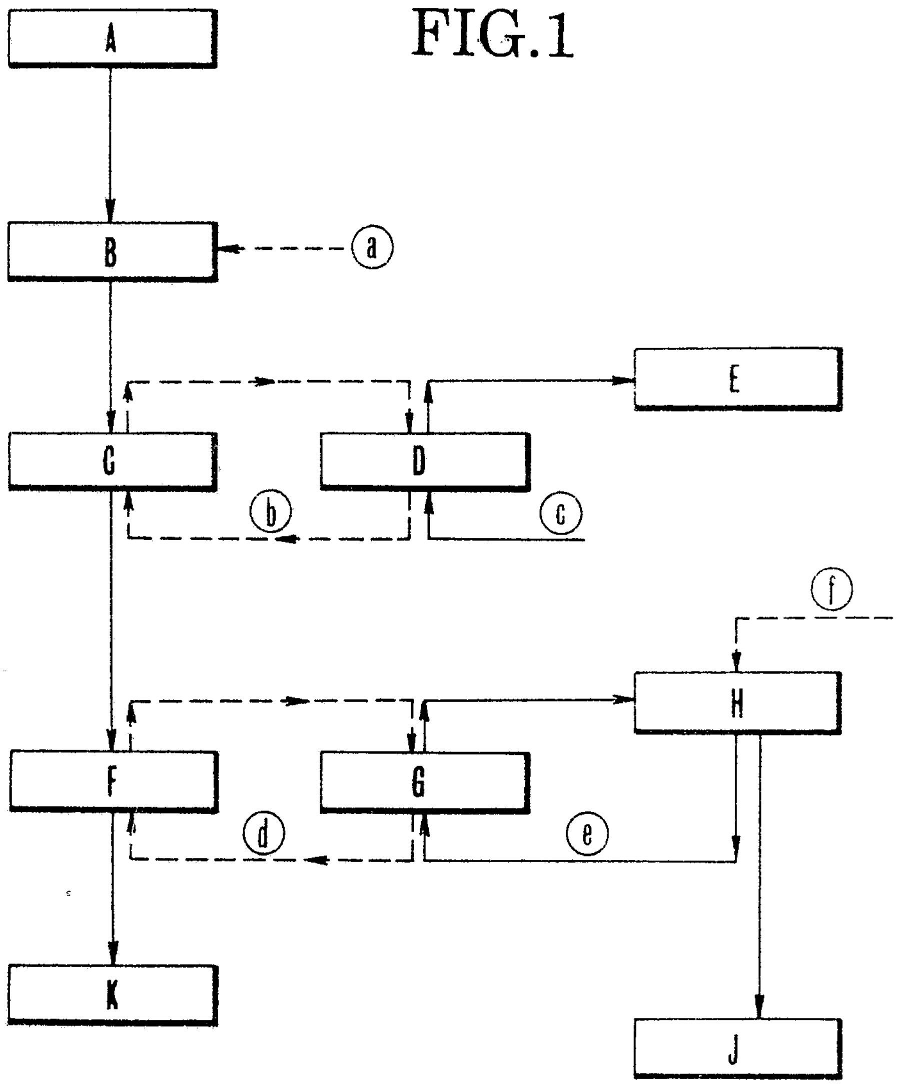

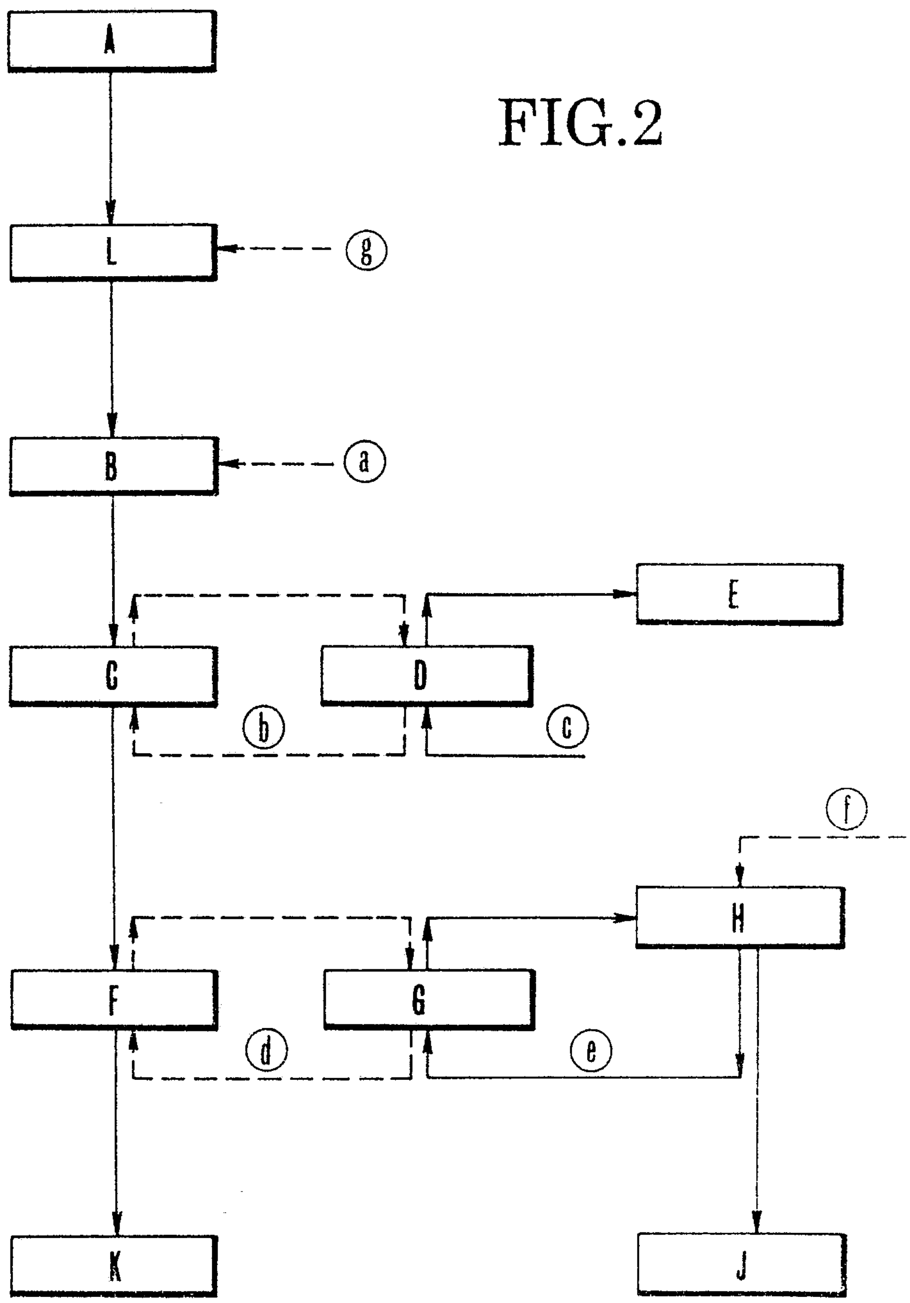


FIG.2

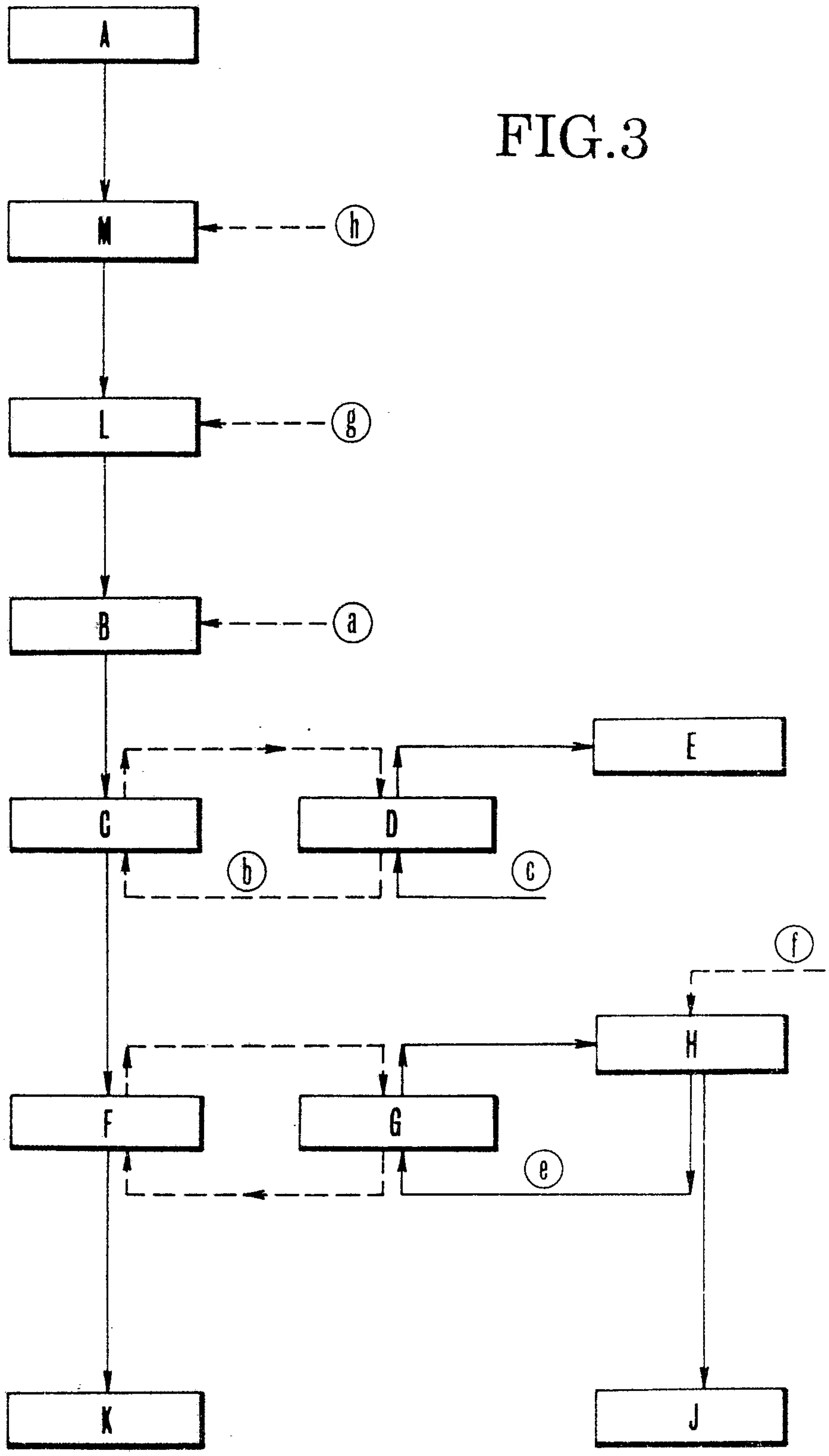


FIG.3

FIG.4

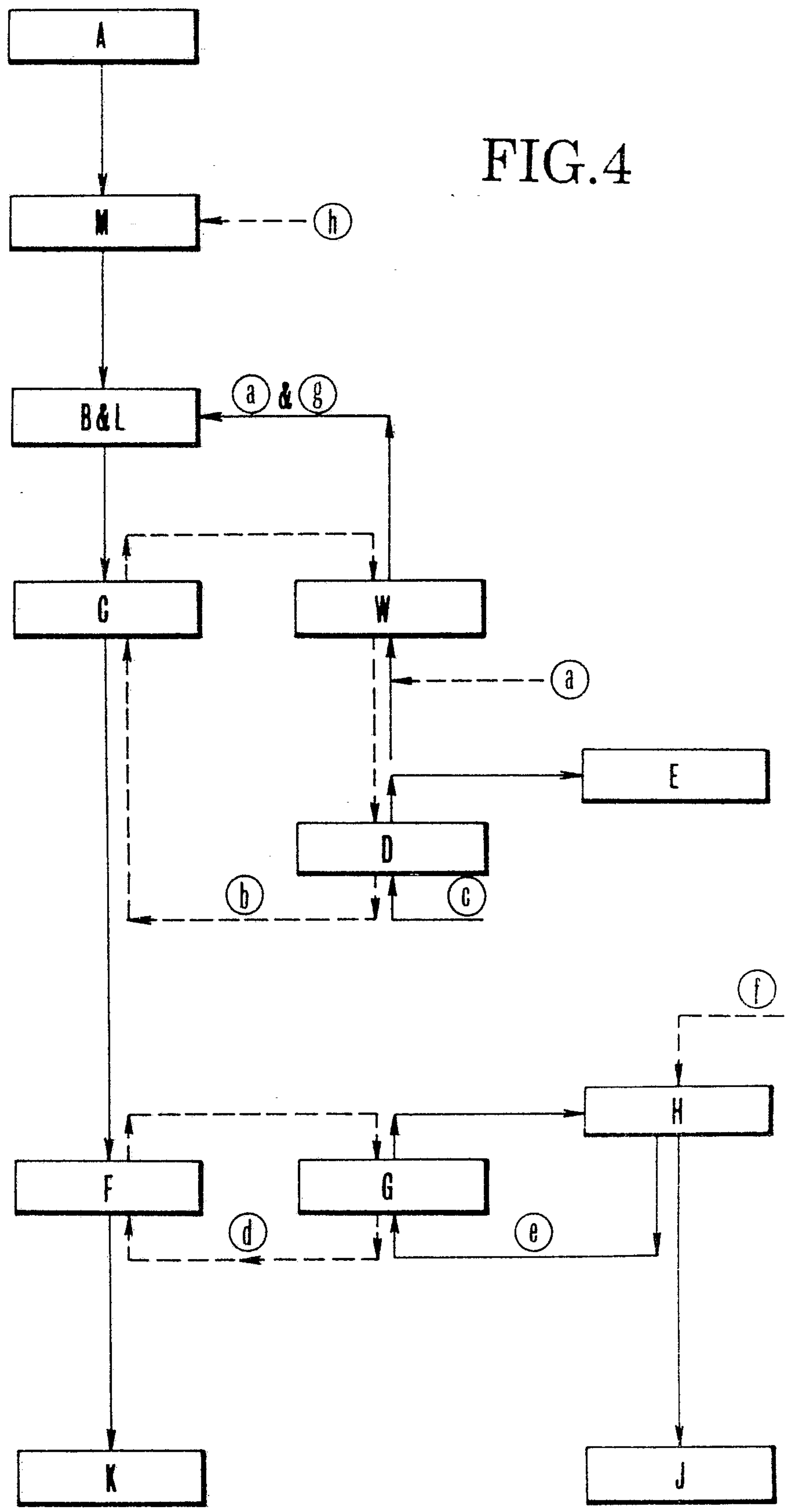

FIG.5

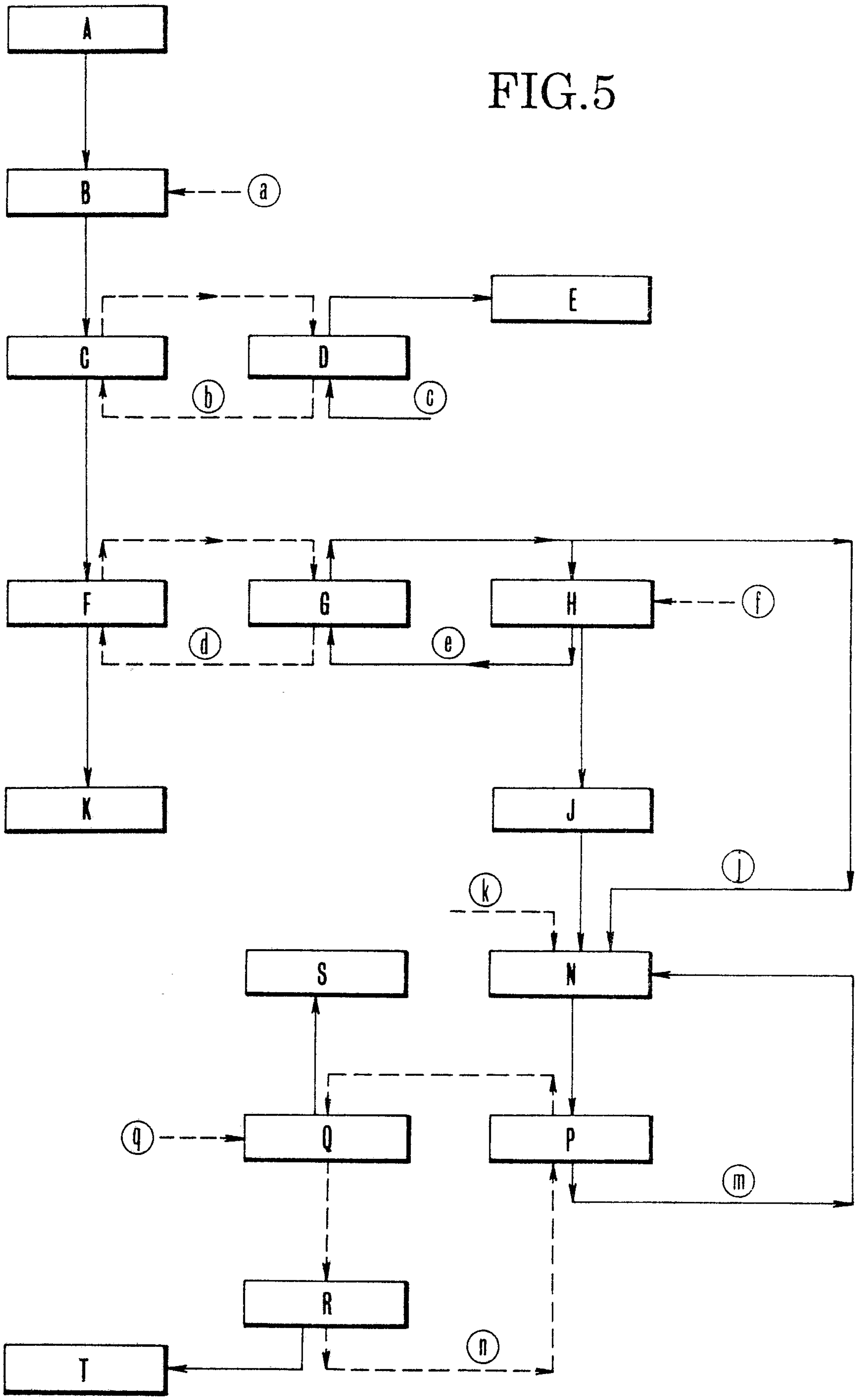

0298763

FIG.6